# EUROPÄISCHE PATENTSCHRIFT

(11) **EP 2 036 647 B1**
(45) Veröffentlichungstag und Bekanntmachung des Hinweises auf die Patenterteilung: **24.04.2013**
(21) Anmeldenummer: 08163390.1
(22) Anmeldetag: 01.09.2008
(51) Int. Cl.: B23K 9/12, B23K 9/133, B23K 3/06

(54) **Verfahren und Vorrichtung für eine diskontinuierliche Drahtförderbewegung insbesondere beim Lichtbogenschweissen oder -löten**
Method and device for a discontinuous wire supply movement in particular for arc welding or soldering
Procédé et dispositif pour un mouvement de refoulement de fil d'acier discontinu en particulier pour soudage ou brasage à l'arc

(30) Priorität: 12.09.2007 DE 102007000723
(43) Veröffentlichungstag der Anmeldung: 18.03.2009
(73) Patentinhaber: EWM Hightec Welding GmbH, 56271 Mündersbach (DE)
(72) Erfinder: Goecke, Sven-Frithjof, 56244, Steinen (DE); Knopp, Norbert, 56337, Arzbach (DE); Schüller, Knut, 65527, Niedernhausen (DE); Bajohr, Nils, 56584, Anhausen (DE)
(74) Vertreter: Cohausz & Florack

(56) Entgegenhaltungen:
- JP-A- 7 096 369
- JP-A- 55 153 677
- US-A- 3 053 975
- US-A- 3 254 197
- US-A- 4 441 012
- US-A- 5 379 941

## Beschreibung

Die Erfindung betrifft ein Verfahren für eine diskontinuierliche Drahtförderung gemäß dem Oberbegriff des Anspruchs 1, insbesondere für den Transport einer drahtförmigen Elektrode als Zusatzmaterial beim Lichtbogenschweißen oder Lichtbogenlöten, bei dem der Draht in einer Drahtführung geführt und kontinuierlich von einem Drahtvorrat in Richtung eines Brenners gefördert wird, wobei der Drahtelektrode eine diskontinuierliche Bewegung durch eine Änderung der Förderstrecke aufgeprägt wird. Die Erfindung betrifft weiterhin eine Vorrichtung zur Durchführung eines derartigen Verfahrens gemäß dem Oberbegriff des Anspruchs 8 (siehe, z.B., US 3 053 975).

Schweißverfahren können für das Verbinden von metallischen und nichtmetallischen Werkstoffen angewendet werden. Zu den am meisten angewendeten Schweißverfahren für das Verbinden von metallischen Werkstoffen gehören unter anderem das Wolfram-Inertgas-Schweißen (WIG) und das Metall-Inertgas-Schweißen (MIG) beziehungsweise das Metall-Aktivgas-Schweißen (MAG). Bei diesen Schweißverfahren erfolgt die Wärmeeinbringung mittels eines in einer geschützten Atmosphäre erzeugten Lichtbogens, wobei die dafür benötigte Energie von einer externen Stromquelle zur Verfügung gestellt wird. Der wesentliche Unterschied zwischen den genannten Schweißverfahren besteht darin, dass beim WIG-Schweißen der Lichtbogen zwischen einer nicht abschmelzenden Wolfram- Elektrode und einem Werkstück erzeugt wird, wohingegen beim MAG- oder MIG-Schweißen eine im Lichtbogen abschmelzende drahtförmige Elektrode einem Schmelzbad maschinell zugeführt wird.

Das MAG- und MIG-Schweißverfahren wird zusammenfassend auch als Metall-Schutzgas-Schweißverfahren (MSG) bezeichnet. Beim MSG-Schweißen strömt Schutzgas aus einer Düse am Brenner aus, welche die Drahtelektrode konzentrisch umgibt und das Schmelzbad beim Zünden des Lichtbogens und während des Schweißprozesses vor dem Zutritt atmosphärischer Gase wie Sauerstoff, Wasserstoff und Stickstoff schützt. Dabei werden das Werkstück und die durch eine Drahtvorschubvorrichtung transportierte Drahtelektrode mittels einer Stromkontaktdüse im Schweißbrenner mit Energie versorgt.

Die für einen derartigen Prozess benötigte Energie wird in bekannter Weise durch eine externe Energiequelle, einer Schweißstromquelle zu Verfügung gestellt.

Schweißverfahren sind allerdings für das Herstellen bestimmter metallischer Verbindungen nicht immer geeignet, beispielsweise wenn sich das Gefüge der verwendeten Werkstücke nicht verändern darf. Zur Lösung dieses Problems kann ein Lötverfahren, beispielsweise das MSG-Lötverfahren eingesetzt werden. Wie auch beim MSG-Schweißverfahren wird die Wärme durch einen, zwischen der Drahtelektrodenspitze und dem Werkstück erzeugten, Lichtbogen eingebracht. Die Funktionsweisen der beiden Lichtbogenprozesse sind weitgehend identisch, lediglich durch den verwendeten Zusatzwerkstoff und die Wahl der Prozessparameter unterscheiden sich diese Fügeverfahren voneinander.

Sowohl beim MSG-Löten als auch beim MSG-Schweißen, nachfolgend zusammenfassend als MSG-Fügeverfahren bezeichnet, wird eine Drahtelektrode von einem Drahtvorrat über eine Förderstrecke in Richtung eines Brenners transportiert. Die Drahtelektrode wird dabei in einer Drahtseele geführt, wobei üblicherweise die Drahtseele, gemeinsam mit Kühlleitungen, Steuerleitungen und mindestens einer stromführenden Verbindungsleitung zu einem Schlauchpaket zusammengefasst sind.

Der Transport der Drahtelektrode erfolgt in bekannter Weise zum Beispiel durch mindestens einen Antrieb, bestehend aus einem Elektromotor mit Getriebe und zwei oder vier Drahtförderrollen, wobei üblicherweise zwei Rollen Antriebsrollen sind, während die gegenüberliegenden Rollen als Andruckrollen dienen. Dabei kann die Andruckkraft über einen federbelasteten Hebel eingestellt werden. Zudem besitzt der Drahtantrieb eine Drehzahlregelung mit der die Drahtfördergeschwindigkeit bestimmt und geregelt werden kann. Dazu ist die Antriebsvorrichtung mit einer Steuervorrichtung verbunden, um die Drahtfördergeschwindigkeit dem jeweiligen Schweißprozess anzupassen zu können.

Beim MSG-Fügeverfahren ist es im Allgemeinen schwierig den Lichtbogen zu zünden, weil die Drahtelektrodenspitze mittels des Drahtvorschubmotors auf das Werkstück gedrückt wird, bevor sich ein stabiler Lichtbogen gebildet hat. In Folge dessen, kommt es häufig zu Fehlzündungen, Abknicken der Drahtelektrode oder zum Abplatzen eines Drahtstückes. Besonders ausgeprägt sind solche Zündfehler bei relativ weichen Drähten und einer schlecht leitenden Werkstückoberfläche.

Man hat in der Vergangenheit versucht, das Zündverhalten bei Schweißverfahren dadurch zu verbessern, dass die Drahtelektrode vor dem Zünden mit langsamer Vorschubgeschwindigkeit zum Werkstück bewegt und erst nach Berührung des Werkstückes auf eine höhere Fördergeschwindigkeit umgeschaltet wird. Zudem sind Zündverfahren bekannt, bei dem die Drahtelektrode bei Berührung mit dem Werkstück erst gestoppt und anschließend zum Zünden des Lichtbogens wieder vom Werkstück wegbewegt wird. Dazu wird der Kontakt der Elektrode mit dem Werkstück mittels Messung erfasst und über die Steuervorrichtung eine Reversierbewegung der Drahtelektrode eingeleitet.

Die Umsteuerung der Antriebvorrichtung und damit der Bewegungsrichtung des Schweißdrahtes kann nicht nur zum Zünden sondern auch prozessabhängig während eines Schweißvorgangs erfolgen. Dazu wird mittels der Steuervorrichtung und einer gemessenen Lichtbogenspannung ein Ausgangssignal zur Veränderung der Bewegung der Drahtelektrode generiert, so dass die Förderbewegung der Drahtelektrode nicht kontinuierlich in Richtung des Werkstücks, sondern diskontinuierlich erfolgt, indem die Vorschubbewegung der Drahtelektrode während des Schweißprozesses zeitweise gestoppt und/oder eine Richtungsumkehr ausgelöst wird.

Der entscheidende Nachteil bei einer derartigen Lösung zur diskontinuierlichen Drahtförderung ist die dabei notwendige periodische Richtungsumkehr durch die Antriebsvorrichtung. Die dabei für eine prozessgesteuerte Förderung der Drahtelektrode notwendigen kurzen Reaktionszeiten, setzen im Wesentlichen eine hohe Dynamik der Antriebsvorrichtung voraus, welche konstruktionsbedingt nur begrenzt erreicht werden kann. Zudem ist der Kostenaufwand im Vergleich zu herkömmlichen Drahtfördervorrichtungen wesentlich höher, da für die geforderte rasche Bewegungsumkehr der Drahtelektrode unter anderem ein leistungsstärkerer Antrieb erforderlich ist. Zudem treten beim Reversieren der Bewegung der Drahtelektrode hohe Kräfte im Antrieb auf, wodurch der Verschleiß der Antriebsvorrichtung wesentlich erhöht wird. Die Folge sind relativ kurze Wartungsintervalle und steigende Kosten.

Beispielsweise ist in der US 3 053 975 A eine Schweißvorrichtung und ein Schweißverfahren offenbart, bei der die Schweißvorrichtung eine diskontinuierlichen Drahtförderung ermöglicht, indem, mittels einer mit einer Drahtführung gekoppelten mechanischen Schwingvorrichtung, einer im Grunde kontinuierlich geförderten Drahtelektrode eine diskontinuierliche Bewegung aufgeprägt wird. Als Antrieb wir ein Motor oder vibrator vorgeschlagen, wobei die Drehbewegung des Motors in eine Linerbewegung umgewandelt wird. Durch die Kopplung der Schwingvorrichtung mit der Drahtführung verändert sich die Förderstrecke der Drahtelektrode, wodurch es zu einer erzielten werkstücksseitigen Änderung der Förderbewegung kommt. Eine ähnliche Vorrichtung und Verfahren wird in der US 4 441 012 A beschrieben, nämlich zum Steuern der Heizleistung während des Aufbringens eines geschmolzenen Füllmaterials auf ein Werkstück, durch eine hin- und hergehende Bewegung eines drahtförmigen Zusatzwerkstoffes beim Schweißen. Die gepulste Drahtzufuhr erfolgt dabei mittels einer Reversiervorrichtung, durch eine einer kontinuierlichen Drahtförderbewegung überlagerten Hin- und Herbewegung einer flexibel gestalteten Drahtführung. Beispielsweise wird vorgeschlagen, zur Erzeugung der diskontinuierlichen Bewegung, eine exzentrische Antriebsvorrichtung zu verwenden. Ziel ist es dabei, die Wärmezufuhr zu regulieren.

Bei beiden vorgeschlagenen Lösungen für eine diskontinuierliche Drahtförderung, ist jedoch eine auf dynamische Prozessänderungen reagierende Regelung der Reversier- oder Schwingvorrichtung nicht möglich. Insbesondere kann es während des Schweißprozesses immer wieder zu unregelmäßigem Abschmelzen der Elektrode kommen, wodurch eine dynamische Nachjustierung der Reversier- oder Schwingvorrichtung erforderlich ist, um den Schweißprozess stabil ablaufen zu lassen.

Aus der JP 55 153677 A ist eine Drahtfördervorrichtung bekannt, bei der unter Verwendung zweier Magnetspulen eine ausschließlich diskontinuierliche Drahtförderung ermöglicht wird. Dabei wird in einem ersten Schritt mit Hilfe einer ersten axial beweglichen Magnetspule der Draht in einer Drahtführung fixiert, während mittels der anderen zweiten Magnetspule eine Bewegung der ersten Magnetspule bewirkt wird, welche der Drahtförderrichtung entspricht. In einem zweiten Schritt wird der Schweißdraht in der Drahtführung der ersten Magnetspule wieder freigegeben. Anschließend bewegt sich die erste Magnetspule wieder in ihre Ausgangslage. Nach diesem Wirkprinzip arbeitet auch eine aus der JP 07 096369 A bekannte Vorrichtung, mit dem Unterschied, dass die Drahtfixierung in einem Abschnitt der Drahtführung der Drahtfördervorrichtung mittels einer beweglich gelagerten Klemmvorrichtung erfolgt, welche mit Hilfe einer Magnetspule zuerst in Drahtförderrichtung bewegt und dabei der Draht durch die Klemmwirkung transportiert wird. Ebenso ist in der US 5 379 941 A eine elektromagnetische Vorschubeinrichtung offenbart, bei der ein Löt- oder Schweißdraht mit Hilfe einer Magnetspule und einem beweglich gelagerten Klemmteil transportiert wird.

Der Nachteil derartiger Drahtfördervorrichtungen ist vor allem der auf eine ausschließlich diskontinuierliche Drahtförderung begrenzte Transport des Drahtes. Insbesondere beim Schweißen kann es dadurch zu einem instabilen Schweißprozess kommen, da der Drahtvorschub immer nur schrittweise erfolgen kann.

Der Erfindung liegt daher die Aufgabe zugrunde, eine Vorrichtung und eine Verfahren anzugeben, mit der eine prozessdynamisch diskontinuierliche Drahtförderung unter Verwendung einer kontinuierlich fördernden Drahtfördervorrichtung, bei einfach gehaltener Bauweise ermöglicht wird.

Diese Aufgabe wird erfindungsgemäß durch die kennzeichnenden Merkmale der Ansprüche 1 und 8 gelöst.
Die Erfindung geht dabei von der Überlegung aus, dass gerade für eine effektive diskontinuierliche Drahtförderung eine reversierende Drahtvorschubvorrichtung aufgrund ihrer konstruktionsbedingten Trägheit nur unzureichend geeignet ist. Gerade durch die hohe Prozessdynamik beim MSG-Fügeverfahren ist es erforderlich, die Bewegung der Drahtelektrode möglichst zeitnah den tatsächlichen Prozessbedingungen anzupassen. Dabei sollte der zur Umsetzung einer diskontinuierlichen Drahtförderung erforderliche Kosten- und Materialaufwand vergleichweise gering sein.

Dies wird dadurch erreicht, indem die Bewegung der Drahtelektrode am Brennerausgang durch eine Längenänderung der Förderstrecke, vom Drahtvorrat bis zum Brenner, verändert wird. Dazu ist dem Drahtvorrat eine Vorrichtung nachgeschaltet, mit deren Hilfe der Förderweg der Drahtelektrode verkürzt oder verlängert werden kann. Dies wird realisiert durch eine als Linearantriebssystem ausgebildete Vorrichtung, wobei mittels des Linearantriebssystems eine Bewegung ausführbar ist, wodurch der Transportweg der Elektrode verändert werden kann. Die daraus resultierende brennerseitige Elektrodenbewegung ist unter anderem abhängig von den Kenndaten des Linearantriebssystems, wie beispielsweise dessen maximale Auslenkung, Beschleunigung und Stellgeschwindigkeit.

Damit die aufgeprägte diskontinuierliche Bewegung der Drahtelektrode den Prozessbedingungen entsprechend angepasst werden kann, erfolgt die Steuerung der Reversiereinheit vorzugsweise über die Steuervorrichtung der Schweißstromquelle, wodurch eine prozessabhängige Bewegung des Linearantriebssystems und damit auch eine Steuerung der diskontinuierlichen Bewegung der Drahtelektrode ermöglicht wird, indem die Prozessparameter überwacht werden.

Durch die translatorische Bewegung eines Linearantriebes des Linearantriebssystems, kann insbesondere die Fördergeschwindigkeit am Brennerausgang zeitweise verringert oder erhöht werden. Beispielsweise erhöht sich die werkstücksseitige Geschwindigkeit der Drahtelektrode für die Zeitdauer, in der der Linearantrieb eine Bewegung entgegen der Förderrichtung ausführt, wobei die Förderstrecke verringert wird. Umgekehrt verringert sich die resultierende Geschwindigkeit der Drahtelektrode am Brennerausgang bei einer Bewegung des Linearantriebes in Förderrichtung der Elektrode, bei der die Förderstrecke wieder vergrößert wird. Die durch die kontinuierliche Drahtvorschubvorrichtung bewirkte Geschwindigkeit der Drahtelektrode kann somit in Abhängigkeit der Bewegungsrichtung des Linearantriebes, um den Betrag der Geschwindigkeit einer Bewegung des Linearantriebes, erhöht oder verringert werden.

Vorteilhafterweise kann ein Linearantriebssystem mit hoher Dynamik zum Einsatz kommen. Damit wird erreicht, dass die resultierende Bewegung der Drahtelektrode zeitweise gestoppt werden kann, indem die Bewegung des Linearantriebes und die kontinuierliche Bewegung der Elektrode im wesentlichen mit derselben Geschwindigkeit erfolgt. Weiterhin kann bei einer weiteren Erhöhung der Geschwindigkeit der Stellbewegung des Linearantriebssystems eine Richtungsumkehr der Drahtelektrode am Brennerausgang erreicht werden. Dabei kann für eine besonders effektive Regelung der resultierenden Geschwindigkeit und/oder Bewegungsrichtung der Elektrode, die Fördergeschwindigkeit der Drahtvorschubvorrichtung, zumindest für die Zeitdauer der Bewegung des Linearantriebes, verringert oder erhöht werden. Somit kann, beispielsweise durch eine Verringerung der kontinuierlichen Fördergeschwindigkeit und einer gleichzeitigen Verlängerung der Förderstrecke, ein Wegbewegen der Drahtelektrode vom Werkstück noch schneller erfolgen, und umgekehrt ist bei einer Erhöhung der Transportgeschwindigkeit durch die Drahtvorschubvorrichtung und einer gleichzeitig eingeleiteten Verkürzung der Förderstrecke, eine Steigerung der Fördergeschwindigkeit der Elektrode in Richtung des Werkstücks möglich.

Da der Transport der Drahtelektrode aufgrund von auftretenden Reibungskräften zwischen der Transportrolle und der Elektrode erfolgt, kann es zu Störungen bei der kontinuierlichen Drahtförderung kommen, insbesondere wenn die Drahtelektrode aus einem vergleichsweise harten Material besteht oder der Anpressdruck auf die Elektrode zu gering gewählt wurde. Diese Störungen beim Transport der Drahtelektrode durch die Drahtvorschubvorrichtungen, können durch eine geeignete Steuerung des Linearantriebsystems kompensiert werden. Dazu wird beispielsweise die Transportgeschwindigkeit überwacht und bei einer Abweichung von einem eingestellten Vorgabewert, die resultierende Bewegung der Elektrode durch eine Bewegung des Linearantriebes korrigiert, derart, dass die brennerseitige Bewegung der Elektrode während eines Schweißprozesses nicht oder nur unwesentlich von der vom Drahtvorschubsystem ausgelösten Störung beeinflusst wird.

Um für die gesamte Dauer eines Fügeprozesses eine diskontinuierliche Drahtförderung ermöglichen zu können, kann die Bewegung des Linearantriebes überwacht, insbesondere der Stellweg des Linearantriebes messtechnisch erfasst werden. Dadurch wird erreicht, dass zu jedem Zeitpunkt während des Prozesses eine Verlängerung oder Verkürzung der Förderstrecke und damit auch eine Bewegungsänderung der Drahtelektrode am Brennerausgang gewährleistet werden kann, indem der Linearantrieb fortlaufend in seine Grundstellung zurückbewegt wird, zumindest aber nach Erreichen eines maximalen Stellweges. Dabei sollte die Bewegung der Elektrode am Brennerausgang nicht durch eine derartige Stellbewegung des Linearantriebes beeinflusst werden. Dies wird dadurch erreicht, indem eine Rückstellbewegung des Linearantriebs, durch eine Anpassung der Prozessparameter und/oder der Anpassung der Fördergeschwindigkeit der Drahtvorschubvorrichtung an die Bewegung des Linearantriebes, kompensiert wird, so dass die Rückstellbewegung keine oder nur eine unwesentliche Auswirkung auf die resultierende Elektrodenbewegung am Brennerausgang zur Folge hat.

Für eine Positionsüberwachung beziehungsweise Lageerfassung des Linearantriebes kann ein im Linearantriebssystem integriertes und/oder ein externes Wegmesssystem eingesetzt werden. Das Lagesignal kann aber auch aus einer zusätzlichen sensorischen Eigenschaft, einer sogenannten "self-sensing"-Eigenschaft des Linearantriebes gewonnen werden. Die somit erhaltenen Werte können weiterhin zur Erfassung der mechanischen Belastung der Linearantriebsvorrichtung genutzt werden. Grundsätzlich ist durch die Überwachung der Linearantriebsbewegung aber auch eine Beurteilung der Lebensdauerdauer des Linearantriebssystems möglich.

Zur Durchführung des erfindungsgemäßen Verfahrens ist eine Vorrichtung vorgesehen, welche zumindest einen, insbesondere im wesentlichen in oder entgegen der Förderrichtung der Drahtelektrode wirkenden, Linearantrieb umfasst. Das Linearantriebssystem ist dabei mit der Drahtführung gekoppelt, derart, dass mit Hilfe des Linearantriebes der Förderweg der Drahtelektrode verlängert oder verkürzt werden kann. Die Grundstellung beziehungsweise Ausgangsstellung des Linearantriebes ist vorzugsweise durch eine Position definiert, welche eine Verlängerung oder Verkürzung der Förderstrecke um jeweils die Hälfte des maximalen Stellweges des Linearantriebes ermöglicht, wodurch die Fördergeschwindigkeit der Drahtelektrode am Brennerausgang gleichermaßen verringert oder erhöht werden kann.

Die Drahtelektrode wird durch eine kontinuierlich fördernde Drahtvorschubvorrichtung von einem Drahtvorrat zum Brenner transportiert, wobei die Drahtelektrode vorzugsweise durch das Linearantriebssystem hindurch förderbar, insbesondere die Drahtelektrode im Linearantriebssystem geführt ist. Das Linearantriebssystem sollte dabei möglichst nahe am Brennerausgang angeordnet, insbesondere im Brenner integriert sein, um die zur Veränderung der Förderstrecke aufzubringenden Stellkräfte möglichst gering zu halten. Grundsätzlich kann die Linearantriebsvorrichtung aber an einer beliebigen Stelle innerhalb der Drahtförderstrecke angeordnet sein. Beispielsweise in einer Ausführungsform, bei der das Linearantriebssystem nicht brennernah positioniert ist, kann innerhalb der Förderstrecke ein Pufferspeicher vorgesehen sein, derart, dass bei einer Stellbewegung der Linearantriebsvorrichtung nur ein relativ kurzer Abschnitt der Drahtführung mitbewegt werden muss. Eine derartig gebildete Reversiereinheit hätte den entscheidenden Vorteil, dass auch bei einer vergleichsweise großen Förderstrecke der Drahtelektrode, eine zuverlässige diskontinuierliche Drahtförderung ermöglicht ist.

Gemäß einer bevorzugten Weiterbildung ist der Linearantrieb als elektromechanischer Linearantrieb ausgebildet. Diese Art der Antriebe sind aufgrund ihres Wirkprinzips besonders geeignet, da sie sich relativ einfach mit Hilfe von Getriebe, Hebel und Gelenken an die jeweiligen kinematischen Anforderungen anpassen lassen. Im Gegensatz zu hydraulischen oder pneumatischen Antrieben wird kein zusätzliches Arbeitmedium benötigt und sie können über eine kurze Steuerstrecke durch eine Steuervorrichtung angesprochen werden. Damit ist es möglich die Förderstrecke der Drahtelektrode, vorzugsweise mittels der Steuervorrichtung der Schweißstromquelle, auf besonders einfach Art und Weise zu verändern um die resultierende Bewegung der Drahtelektrode den Prozessbedingungen anzupassen.

Beispielsweise kann der Linearantrieb aber auch als Linearmotor ausgebildet sein, wobei eine ursprünglich kreisförmige Bewegung in eine Translationsbewegung umgewandelt wird. Mit einem derartigen Funktionsprinzip sind hohe Beschleunigungen möglich, wodurch kurze Reaktionszeiten erreicht werden können.

Ein im Vergleich zum Linearmotor schnelleres Ansprechverhälten, kann durch den Einsatz von Piezoaktoren erreicht werden. Vorteilhafterweise sind diese Aktoren umkehrspielfrei, wodurch die diskontinuierliche Bewegung der Drahtelektrode am Brennerausgang sehr präzise und nahezu ohne zeitliche Verzögerung gesteuert werden kann. Da der maximale Stellweg derartiger Antriebe relativ gering ist, können auch mehrere Piezoaktoren in Reihe geschaltet werden. Eine weitere Möglichkeit den Stellweg zu verlängern ist eine Übersetzung des Aktorweges und/oder eine Kombination aus zwei Querdehnelementen, bestehend aus einem piezoelektrischen Material, wobei eine entgegengesetzte Ansteuerung der Querdehnelemente eine Biegebewegung des Aktors bewirkt, welche in eine Linearbewegung umgewandelt werden kann.

In besonders vorteilhafter Ausgestaltung der Vorrichtung ist der Linearantrieb als elektromagnetischer Linearantrieb ausgebildet, bei der die Stellbewegung aufgrund einer bewegten Spule im Magnetfeld, einem bewegten Permanentmagneten zwischen feststehenden Spulen oder einem bewegten Eisenkern erfolgen kann.

Die Wirkungsweise eines Linearantriebssystems mit bewegtem Eisenanker beruht dabei auf der Kraftwirkung, die im inhomogenen magnetischen Feld auf magnetische Grenzflächen ausgeübt wird. Die Kraft-Weg-Kennlinie und die Kraft-Strom-Kennlinie kann dabei mit Hilfe der magnetischen Sättigung vom Eisen beeinflusst werden. Neben der Verwendung eines Eisenkerns als Anker für eine Linearantriebsvorrichtung, kann auch ein Permanentmagnet eingesetzt werden. Möglich ist auch ein Aufbau der Linearantriebsvorrichtung, bei dem die Spule bewegt wird und der Eisenkern fixiert ist. Da bei dieser Antriebsart eine relativ kleine Masse bewegt wird, sind vergleichsweise hohe Beschleunigungen und Arbeitsfrequenzen erreichbar.

Um für die gesamte Zeitdauer des Fügeprozesses einen besonders zuverlässigen Prozessablauf gewährleisten zu können, sollte die Reversiereinheit, insbesondere das Linearantriebssystem gekühlt werden. Grundsätzlich kann zwischen Selbstkühlung und Fremdkühlung unterschieden werden. Bei einer Selbstkühlung wird die Reversiereinheit ohne Verwendung eines Lüfters durch Luftbewegung und Wärmeabstrahlung gekühlt, bei Fremdkühlung entweder durch einen Lüfter oder statt der Luft durch ein anderes Kühlmittel. Dabei kann auf besonders einfache Art und Weise eine für den Brenner bereits vorhandene Kühlvorrichtung, insbesondere eine Kühlvorrichtung einer Schweißstromquelle, mit genutzt werden, indem eine von der Kühlvorrichtung zum Brenner führende Kühlmittelleitung über die Reversiereinheit zu deren Kühlung geführt wird.

In zusätzlich vorteilhafter Weiterbildung kann die Reversiereinheit, für ein Fixieren der Drahtelektrode, mit einer Klemmvorrichtung versehen sein. Dadurch wird erreicht, dass die der kontinuierlichen Elektrodenbewegung aufgeprägten diskontinuierlichen Bewegung, im wesentlichen der Stellbewegung des Linearantriebes entspricht, wobei mittels der Klemmvorrichtung ein Zurückschieben der Drahtelektrode in das Schlauchpaket verhindert wird. Vorzugsweise ist die Klemmvorrichtung in dem Linearantriebssystem integriert und über eine Schnittstelle durch eine Steuervorrichtung, insbesondere durch die Steuervorrichtung der Schweißstromquelle, steuerbar.

Die Steuerung der Reversiereinheit erfolgt ebenfalls vorzugsweise über die Steuervorrichtung der Schweißstromquelle, wobei es selbstverständlich möglich ist, die Steuerung durch ein serielles oder paralleles Bussystem z.B. Feldbus zu realisieren. Dazu sind vorzugsweise alle Komponenten der Schweiß- oder Lötvorrichtung mit einer geeigneten Schnittstelle ausgestattet. Die Datenübertragung kann dabei über eine Steuerleitung im Schlauchpaket oder kabellos erfolgen.

Selbstverständlich kann eine derartige Reversiereinheit auch für andere Lichtbogenschweißverfahren oder auch für Lichtbogenlötverfahren eingesetzt werden, bei denen ein drahtförmiger Zusatzwerkstoff verwendet wird. Beispielsweise also auch bei einem Wolfram-Schutzgas-Fügeverfahren (WSG-Löt- und Schweißprozesse) mit einer nichtabschmelzenden Elektrode oder beim Plasmaschweißen beziehungsweise Plasmalöten, bei der eine Drahtelektrode mittels einer Drahtvorschubvorrichtung dem Schmelzbad während eines Schweißprozesses zuführbar ist, wobei die Drahtelektrode auch mit zusätzlicher Energie (Heißdraht-Technik) für eine verbesserte Wärmeeinbringung versorgt werden kann.

Die mit der Erfindung erzielten Vorteile bestehen insbesondere darin, dass eine diskontinuierliche Bewegung der Drahtelektrode am Brennerausgang mit relativ geringem Aufwand ermöglicht ist. Dabei können herkömmliche, kontinuierlich fördernde Drahtvorschubvorrichtungen zum Einsatz kommen, wodurch die Kosten gering gehalten werden können. Weiterhin kann durch den vergleichsweise verschleißarmen Betrieb der erfindungsgemäßen Vorrichtung, die Betriebsdauer wesentlich gesteigert werden. Zudem sind relativ hohe Geschwindigkeits- und Beschleunigungswerte der Elektrodenbewegung am Brennerausgang möglich, wodurch die Elektrodenbewegung den Prozessbedingungen beim Fügen sowie beim Zünden des Lichtbogens, besonders effektiv angepasst werden kann.

Ein Ausführungsbeispiel der Erfindung wird anhand einer Zeichnung näher erläutert. Darin zeigen:
- FIG 1: eine schematische Darstellung einer Vorrichtung zur Durchführung eines MSG-Fügeprozesses mit einer Reversiereinheit zum Aufprägen einer diskontinuierlichen Drahtförderbewegung,
- FIG 2: eine schematische Darstellung einer Reversiereinheit mit einem schlaufenförmigen Abschnitt der Förderstrecke als Pufferspeicher.

Gleiche Teile sind in beiden Figuren mit denselben Bezugszeichen versehen.

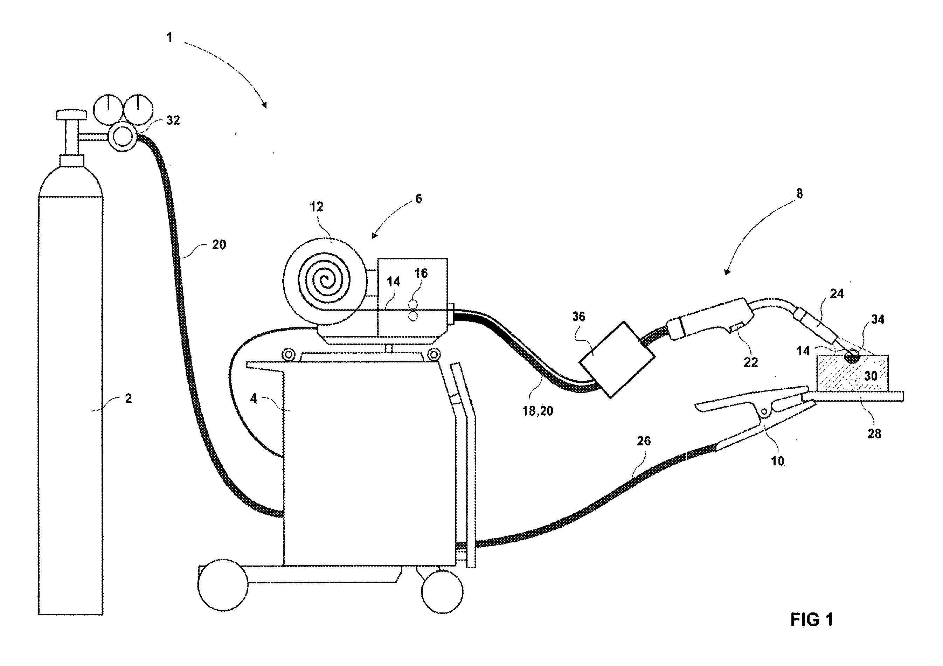

Die FIG 1 zeigt eine Vorrichtung 1 zur Durchführung eines MSG-Fügeprozesses, bestehend aus einem Schutzgasspeicher 2, einer geregelte Schweißstromquelle 4, einer Drahtvorschubvorrichtung 6, einem Handbrenner 8 und einer Masseanschluss 10. Die Drahtvorschubvorrichtung 6 weist dabei eine Drahtspule 12 auf, wobei eine Drahtelektrode 14 von dieser Drahtspule 12 mittels eines Drahtfördersystems 16 abgezogen und zu dem Brenner 8 gefördert wird. Hierbei erfolgt die Förderung im wesentlichen durch ein hier nicht dargestelltes Schlauchpaket. In diesem Schlauchpaket verlaufen zudem, ein erstes Versorgungskabel 18, welches über eine Kontaktdüse im Brenner 8 die Drahtelektrode 14 mit Energie versorgt, Kühlkanäle zur Kühlung des Brenners 8, eine Schutzgasleitung 20 sowie Steuerleitungen für die Steuerung der Schweißstromquelle 4 und/oder der Drahtvorschubvorrichtung 6 mittels Bedienelement 22 am Brenner 8. Am Brennerausgang befindet sich eine Stromkontaktdüse, welche von einer Schutzgasdüse 24 umgeben ist. Ein zweites Versorgungskabel 26 stellt mittels der Masseanschluss 10 und einer Werkstückauflage 28 eine elektrische Verbindung zwischen der Schweißstromquelle 4 und einem Werkstück 30 her.

Die Schweißstromquelle 4 weist eine Ein- und Ausgabevorrichtung auf, mit deren Hilfe die unterschiedlichen Parameter beziehungsweise Betriebsarten für den Fügeprozess eingestellt werden können, wobei diese Daten an eine hier nicht dargestellte Steuervorrichtung, zur Steuerung der einzelnen Komponenten der Fügevorrichtung 1, weitergeleitet werden. Die Drahtvorschubvorrichtung 6 ist mit der Schweißstromquelle 4 gekoppelt, derart, dass die Drahtförderung über die Steuervorrichtung in der Schweißstromquelle 4 gesteuert wird. Dabei kann die Vorschubvorrichtung 6 statt, wie in FIG 1 als extern ausgebildete Zusatzvorrichtung dargestellt, auch in der Schweißstromquelle 4 integriert sein. Die Schutzgaszuführung erfolgt ausgehend von dem Schutzgasspeischer 2, welcher zur Druckregulierung mit einer Armatur 32 versehen ist, über die Schutzgasleitung 20 zum Brenner 8, wobei die Schutzgaszufuhr über hier nicht dargestellte Steuerventile reguliert werden kann.

Innerhalb der Förderstrecke zwischen der Drahtvorschubvorrichtung 6 und dem Brenner 8, ist eine Reversiereinheit 36 zum Aufprägen einer diskontinuierlichen Drahtförderbewegung angeordnet, mit deren Hilfe die Förderstrecke verlängert oder verkürzt werden kann. Dabei verlaufen entlang der Förderstrecke der Drahtelektrode 14, die Leitungen sowie Kühlkanäle über die Reversiereinheit 36, wobei die zum Schlauchpaket gehörenden Leitungen und Kanäle auch extern an der Reversiereinheit 36 vorbeigeführt werden können und nur eine Drahtführung 42 und die Drahtelektrode 14 durch die Reversiereinheit geführt sind.

Die Reversiereinheit 36 umfasst ein Linearantriebssystem 38 für die Änderung der Förderstrecke, einen Pufferspeicher 40 und eine hier nicht dargestellte Klemmvorrichtung, welche eine Bewegung der Drahtelektrode 14 in der Drahtführung 42, seitens der Drahtvorschubvorrichtung 6 durch das Linearantriebssystem 38, verhindern soll. Durch die Kopplung des Linearantriebssystems 38 mit dem Pufferspeicher 40, wird, für eine Verlängerung oder Verkürzung der Förderstrecke, somit nur ein bestimmter Längenabschnitt der Drahtführung 42 innerhalb der Reversiereinheit 36 bewegt. Dieser Abschnitt der Förderstrecke sollte möglichst klein gehalten werden um eine effektive Funktionsweise der Reversiereinheit 36 gewährleisten zu können.

Der Abstand zwischen der Reversiereinheit 36 und dem Brenner 8 ist im Vergleich zur Förderstrecke von der Drahtfördervorrichtung 6 bis zur Reversiereinheit 36 klein gewählt, um eine effektive Übertragung der Linearbewegung 41 des Linearantriebssystems 38 auf die Elektrodenbewegung am Brennerausgang zu erreichen. Selbstverständlich kann die Reversiereinheit 36 für eine noch effektivere Übertragung der diskontinuierlichen Bewegung, auch im Brenner 8 angeordnet sein. Hierbei ist jedoch zu beachten, dass konstruktionsbedingt möglicherweise nur eine relativ geringe Stellbewegung des Linearantriebssystems 38 möglich ist.

Die Steuerung der Reversiereinheit 36 erfolgt, gemäß der Erfindung, über die Steuervorrichtung, indem die Stellbewegung 41 des Linearantriebssystems 38 und die Prozessparameter überwacht werden. Somit ist eine prozessabhängige Bewegung 41 des Linearantriebssystems 38 und damit eine Steuerung der diskontinuierlichen Bewegung der Drahtelektrode 14 am Brennerausgang ermöglicht. Die Datenübertragung für die Steuerung erfolgt dabei über eine Steuerleitung im Schlauchpaket mit Hilfe eines Bussystems.

Insbesondere kann die Steuerung der Reversiereinheit 36 über das Bedienelement 22 am Brenner 8, der Schweißstromquelle 4 und/oder über die Reversiereinheit 36 selbst erfolgen. Dazu ist die Reversiereinheit 36 mit einer Ein- und Ausgabevorrichtung versehen, welche mit der Steuervorrichtung verbunden ist.

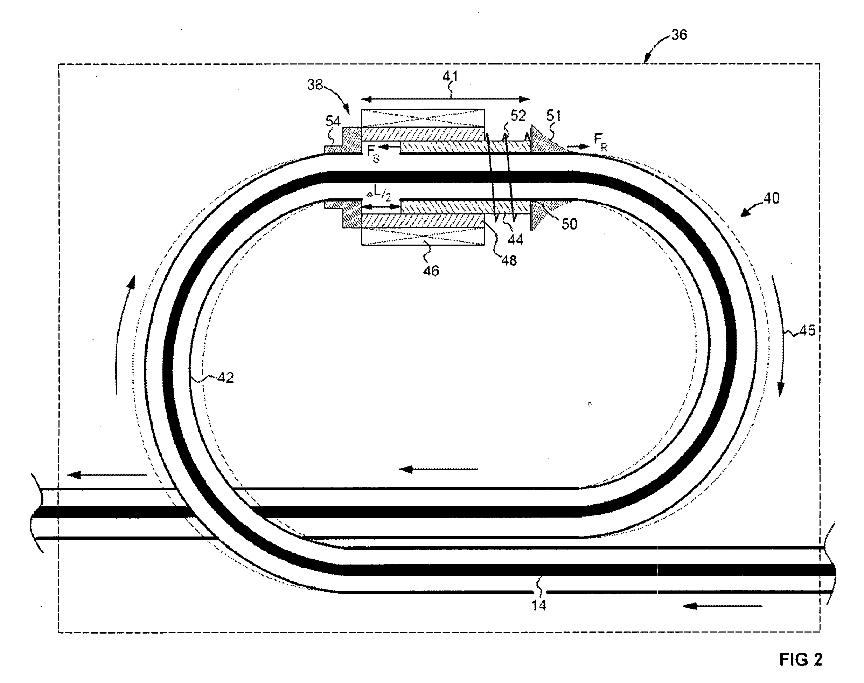

Eine mögliche Ausführungsform der Reversiereinheit 36, umfassend ein mit einem Pufferspeicher 40 gekoppeltes Linearantriebssystem 38, ist in FIG 2 dargestellt. Dabei ist der Pufferspeicher 40 in besonders einfacher Art und Weise mittels der Drahtführung 42 in Form einer Schleife gebildet. Innerhalb dieser Schleife ist das Linearantriebssystem 38 angeordnet, derart, dass dessen Stellbewegung 41 im wesentlichen in oder entgegen der Förderichtung 45 der Drahtelektrode 14 verläuft. Die als Drahtführung 42 dienende Drahtseele 42 ist an einer Stelle unterbrochen, wobei deren Enden innerhalb der Schleife mit dem Linearantriebssystem 38 gekoppelt sind, derart, dass die Drahtelektrode 14 durch das Linearantriebssystem 38 hindurch gefördert wird.

Das Linearantriebssystem 38 weist dabei einen rotationssymmetrischen Querschnitt auf und ist aus einem linear beweglichen Anker 44 und einem in seiner Lage fixierten, von einem Magnetkörper 46 umgebenen, Stator 48 gebildet. Der dabei als Führungslager des Ankers 44 dienende Stator 48 ist mit dem von der Drahtvorschubvorrichtung 6 kommenden Ende der Drahtseele 42 kraftschlüssig verbunden, das brennerseitige Ende der Seele 42 hingegen ist am beweglichen Anker 44 befestigt. Zur Führung der Drahtseele 42 im Anker 44, ist dieser mit einer in Längsrichtung zentrisch verlaufenden Ausnehmung 50 versehen, wobei das innerhalb der Ausnehmung 50 geführte Ende der Seele 42 in der Ausnehmung 50 mit dem Anker 44 stoffschlüssig verbunden ist. Dabei schließt sich dem in Förderrichtung der Drahtelektrode 14 gesehenen Ende des Ankers 44 ein Biegeschutz 51 an, welcher die Drahtseele 42 partiell umgibt und einer Beschädigung der Drahtseele, durch eine an dieser Stelle auftretenden dynamischen Biegebelastung, entgegenwirkt.

Der Magnetkörper 46 ist als Spulenkörper 46 ausgebildet, welcher nach Anlegen einer Spannung ein Magnetfeld erzeugt, so dass auf den Anker 44 eine Kraft F_{S} entgegen der Förderrichtung 45 der Drahtelektrode 14 ausgeübt wird. Dazu weist der Anker 44 ferromagnetische Eigenschaften auf. Die für eine Rückstellbewegung des Ankers 44 erforderliche Kraft F_{R} wird mittels einer extern angeordneten Schraubendruckfeder 52 erzeugt. Diese ist konzentrisch zwischen der brennerseitigen Stirnseite des Stators 48 und des Ankers 44 angeordnet, derart, dass der Vektor der Rückstellkraft F_{R} im wesentlichen in Richtung der Drahtförderrichtung 45 zeigt. Die Kraft-Weg-Kennlinie der Linearantriebssystems 38 wird neben weiteren Kennwerten durch die Kennwerte der Schraubendruckfeder 52 definiert. Selbstverständlich kann an Stelle der Druckfeder 52 oder zusätzlich, für die Rückstellbewegung des Ankers 44, beispielsweise mindestens ein weiterer Spulenkörper 46 eingesetzt werden.

Wie der Darstellung in FIG 2 entnehmbar ist, befindet sich der Anker 44 in einer Grundstellung innerhalb des Stators 48, welche eine Bewegung des Ankers 44 in oder entgegen der Förderrichtung 45 der Drahtelektrode 14 um ΔL/2 zulässt, wobei ΔL den maximalen Stellweg definiert. Dabei ist der Stellweg ΔL bei einer Bewegung des Ankers 44 in entgegen gesetzter Richtung zur Förderrichtung 45, durch eine Anschlagplatte 54 und in Förderichtung, durch ein hier nicht dargestelltes Anschlagelement begrenzt. Die Dimensionierung der Feder 52 und die Kennwerte des Linearantriebssystems 38 sind dabei so gewählt, dass einerseits die Stellkaft F_{S} zur Überwindung der Rückstellkraft F_{R} entsprechend groß ist und andererseits die Rückstellkraft eine maximale Stellbewegung 41, dass heißt, eine maximale Verlängerung der Förderstrecke ermöglicht ist. Dabei ist das Kräfteverhältnis zwischen F_{S} und F_{R} derart eingestellt, dass eine gleichgroße maximale Geschwindigkeit des Ankers in beiden Stellrichtungen erreicht werden kann.

Durch die Bewegung des Ankers 44 des Linearantriebssystems 38 kann die Förderstrecke der Drahtelektrode 14 um die Länge ΔL dynamisch verändert werden, wodurch eine Verringerung oder Erhöhung der Geschwindigkeit der Elektrodenbewegung am Brennerausgang erreicht wird. Der Pufferspeicher 40 verhindert dabei, dass das gesamte Schlauchpaket mitbewegt werden muß. Eine Bewegung der Drahtführung 42 während einer Stellbewegung 41 des Linearantriebssystems 38, ist in dieser Figur durch eine gestrichelte Linie angedeutet.

Die Überwachung der Stellbewegung 41 des Linearantriebssystems 38 erfolgt dabei durch Messung der Stromstärke zum Betreiben des Linearantriebssystems 38. Dadurch wird erreicht, dass die Position des Ankers 44 im Stator 48 bestimmt und insbesondere der Anker 44 vor Beginn eines Fügeprozesses in seine Grundstellung gebracht werden kann. Zudem lassen sich auf diese Weise Fehler bei der Drahtförderung feststellen, da bei einem bekannten Kraft-Stellweg-Verlauf, sich Störungen bei der kontinuierlichen Drahtförderung durch Abweichungen der Stellkräfte F_{S}, F_{R} erkennen lassen. Dazu wird die Reversiereinheit 36 vor Beginn des Fügeprozesses kalibriert, wobei die dabei ermittelten Daten in einem Datenspeicher abgelegt und jederzeit wieder abgerufen werden können.

Die Vorrichtung 1 ist spezifisch auf eine dynamische Prozessanpassung der resultierenden Elektrodenbewegung am Brennerausgang ausgerichtet. Dazu wird auf besonders einfache Art und Weise der kontinuierlich geförderten Drahtelektrode 14 eine diskontinuierliche Bewegung aufgeprägt, indem die Förderstrecke der Drahtelektrode 14 verändert wird. Dabei können herkömmliche Drahtfördervorrichtungen 6 eingesetzt werden, wodurch die Kosten gering gehalten werden können. Weiterhin lassen sich mit einer derartigen Vorrichtung 36 Fehler bei der kontinuierlichen Drahtförderung ohne zusätzliche Mittel detektieren.

### Bezugszeichenliste

| | |
|---|---|
| 1 | Vorrichtung für ein MSG-Fügeverfahren |
| 2 | Schutzgasspeicher |
| 4 | Schweißstromquelle |
| 6 | Drahtvorschubvorrichtung |
| 8 | Brenner |
| 10 | Masseanschluss |
| 12 | Drahtspule |
| 14 | Drahtelektrode |
| 16 | Drahtfördersystem |
| 18 | Versorgungskabel für Brenner |
| 20 | Schutzgasleitung |
| 22 | Bedienelement |
| 24 | Schutzgasdüse |
| 26 | Versorgungskabel für Werkstück |
| 28 | Werkstückauflage |
| 30 | Werkstück, Grundwerkstoff |
| 32 | Armatur |
| 34 | Lichtbogen |
| 36 | Reversiereinheit |
| 38 | Linearantriebssystem |
| 40 | Pufferspeicher |
| 41 | Linearbewegung des Linearantriebssystems |
| 42 | Drahtführung |
| 44 | Anker |
| 45 | Förderrichtung der Drahtelektrode |
| 46 | Magnetkörper |
| 48 | Stator |
| 50 | Ausnehmung |
| 51 | Biegeschutz |
| 52 | Schraubendruckfeder |
| 54 | Anschlagplatte |

## Patentansprüche

1. Verfahren für eine diskontinuierliche Drahtförderung, insbesondere beim Lichtbogenschweißen oder Lichtbogenlöten, bei dem die Drahtelektrode (14) in einer Drahtführung (42) geführt und kontinuierlich von einem Drahtvorrat (12) in Richtung eines Brenners (8) gefördert wird, wobei der Drahtelektrode (14) eine diskontinuierliche Bewegung aufgeprägt wird, indem eine Förderstrecke der Drahtelektrode (14), durch eine translatorische Bewegung (41) mindestens eines mit der Drahtführung (42) gekoppelten Linearantriebssystems (38) einer Reversiereinheit (36) verlängert oder verkürzt wird, **dadurch gekennzeichnet, dass** über eine Steuervorrichtung für eine Schweißstromquelle (4) die Steuerung der Reversiereinheit (36) erfolgt, wobei durch die Steuervorrichtung Prozessparameter und Bewegung (41) des Linearantriebssystems (38) überwacht werden, so dass eine prozessabhängige Bewegung des Linearantriebssystems (38)und damit eine Steuerung der diskontinuierlichen Bewegung der Drahtelektrode (14) am Brennerausgang ermöglicht wird.

2. Verfahren nach Anspruch 1, **dadurch gekennzeichnet, dass** die translatorische Bewegung (41) im Wesentlichen in oder entgegen der Förderrichtung (45) der Drahtelektrode (14) ausgeführt wird.

3. Verfahren nach Anspruch 1 oder 2, **dadurch gekennzeichnet, dass** eine brennerseitige Fördergeschwindigkeit der Drahtelektrode (14), durch die translatorische Bewegung (41) des Linearantriebssystems 38, zeitweise verringert oder erhöht wird.

4. Verfahren nach einem der Ansprüche 1 bis 3, **dadurch gekennzeichnet, dass** eine brennerseitige Bewegung der Drahtelektrode (14), durch die translatorische Bewegung (41) des Linerantriebssystems (38), zeitweise gestoppt wird.

5. Verfahren nach einem der Ansprüche 1 bis 4, **dadurch gekennzeichnet, dass** eine brennerseitige Bewegung der Drahtelektrode (14), durch die translatorische Bewegung (41) des Linerantriebssystems (38), zeitweise entgegen der Förderrichtung (45) der Drahtelektrode (14) erfolgt.

6. Verfahren nach einem der Ansprüche 1 bis 5, **dadurch gekennzeichnet, dass** Unregelmäßigkeiten bei der Förderung der Drahtelektrode (14), durch die translatorische Bewegung (41) des Linerantriebssystems (38), kompensiert werden.

7. Verfahren nach einem der Ansprüche 1 bis 6, bei dem die translatorische Bewegung (41) des Linearantriebssystems (38) überwacht wird.

8. Vorrichtung (36) für das Aufprägen einer diskontinuierlichen Drahtförderbewegung, insbesondere zur Durchführung des Verfahrens nach einem der vorherigen Ansprüche, mit einer kontinuierlich fördernden Drahtvorschubvorrichtung(6), bei der die Drahtführung (42) mit mindestens einem Linearantriebssystem (38) einer Reversiereinheit (36) gekoppelt ist, **dadurch gekennzeichnet, dass** die Reversiereinheit (36) und eine die Stellbewegung des Linearantriebssystems (38) der Reversiereinheit (36) überwachende Vorrichtung mit einer Steuervorrichtung für eine Schweißstromquelle (4) verbunden ist, wobei durch die Steuervorrichtung Prozessparameter und Bewegung (41) des Linearantriebssystems (38) überwacht werden, so dass eine prozessabhängige Bewegung des Linearantriebssystems und damit eine Steuerung der diskontinuierlichen Bewegung der Drahtelektrode am Brennerausgang ermöglicht wird.

9. Vorrichtung (36) nach Anspruch 8, **dadurch gekennzeichnet, dass** die Drahtelektrode (14) durch das Linearantriebssystem hindurch förderbar ist.

10. Vorrichtung (36) nach Anspruch 8 oder 9, **dadurch gekennzeichnet, dass** sie einen Pufferspeicher (49) umfasst.

11. Vorrichtung (36) nach Anspruch 10, **dadurch gekennzeichnet, dass** der Pufferspeicher (49) durch die Drahtführung (42) gebildet ist.

12. Vorrichtung (36) nach Anspruch 8 oder 9, **dadurch gekennzeichnet, dass** das Linearantriebssystem (38) als elektromechanisches Linearantriebssystem (38) ausgebildet ist.

13. Vorrichtung (36) nach Anspruch 12, **dadurch gekennzeichnet, dass** das Linearantriebssystem (38) als Linearmotor ausgebildet ist.

14. Vorrichtung (36) nach Anspruch 12, **dadurch gekennzeichnet, dass** das Linearantriebssystem (38) als piezoelektrischer Linearaktor ausgebildet ist.

15. Vorrichtung (36) nach Anspruch 12, **dadurch gekennzeichnet, dass** das Linearantriebssystem (38) als elektromagnetischer Linearantrieb ausgebildet ist.

16. Vorrichtung (36) nach einem der Ansprüche 8 bis 15, **dadurch gekennzeichnet, dass** sie zum Fixieren der Drahtelektrode (14) mit einer Klemmvorrichtung versehen ist.

17. Vorrichtung (36) nach Anspruch 16, **dadurch gekennzeichnet, dass** die Klemmvorrichtung im Linearantriebssystem (38) integriert ist.

18. Vorrichtung (36) nach einem der Ansprüche 8 bis 17, **dadurch gekennzeichnet, dass** die Klemmvorrichtung mit der Steuervorrichtung verbunden ist.

19. Schweiß- oder Lötvorrichtung (1) mit einer Vorrichtung (36) nach einem oder mehreren der vorherigen Ansprüche 8 bis 18.

## Claims

1. A method for a discontinuous wire feed, particularly during arc welding or arc soldering, in which the wire electrode (14) is guided in a wire guide (42) and continuously fed from a wire supply (12) in the direction of a burner (8), wherein the wire electrode (14) is subjected to a discontinuous movement, in that a feed section of the wire electrode (14) is elongated or shortened by a translational movement (41) of at least one linear drive system (38) of a reversing unit (36), which is coupled to the wire guide (42), **characterised in that** the control of the reversing unit (36) takes place via a control device for a welding current source (4), wherein process parameters and movement (41) of the linear drive system (38) are monitored by the control device, so that a process-dependent movement of the linear drive system (38) and thus a control of the discontinuous movement of the wire electrode (14) at the burner outlet is enabled.

2. The method according to Claim 1, **characterised in that** the translational movement (41) is essentially executed in or counter to the feed direction (45) of the wire electrode (14).

3. The method according to Claim 1 or 2, **characterised in that** a burner-side feed rate of the wire electrode (14) is reduced or increased from time to time by the translational movement (41) of the linear drive system (38).

4. The method according to one of Claims 1 to 3, **characterised in that** a burner-side movement of the wire electrode (14) is stopped from time to time by the translational movement (41) of the linear drive system (38).

5. The method according to one of Claims 1 to 4, **characterised in that** a burner-side movement of the wire electrode (14) takes place counter to the feed direction (45) of the wire electrode (14) from time to time due to the translational movement (41) of the linear drive system (38).

6. The method according to one of Claims 1 to 5, **characterised in that** irregularities during the feeding of the wire electrode (14) are compensated by the translational movement (41) of the linear drive system (38).

7. The method according to one of Claims 1 to 6, in which the translational movement (41) of the linear drive system (38) is monitored.

8. A device (36) for imposing a discontinuous wire feed movement, particularly for carrying out the method according to one of the preceding claims, with a continuously feeding wire feed device (6), in which the wire guide (42) is coupled to at least one linear drive system (38) of a reversing unit (36), **characterised in that** the reversing unit (36) and a device monitoring the adjusting movement of the linear drive system (38) of the reversing unit (36) are connected to a control device for a welding current source (4), wherein process parameters and movement (41) of the linear drive system (38) are monitored by the control device, so that a process-dependent movement of the linear drive system and thus a control of the discontinuous movement of the wire electrode at the burner outlet is enabled.

9. The device (36) according to Claim 8, **characterised in that** the wire electrode (14) can be fed through the linear drive system.

10. The device (36) according to Claim 8 or 9, **characterised in that** it comprises a buffer store (49).

11. The device (36) according to Claim 10, **characterised in that** the buffer store (49) is formed by the wire guide (42).

12. The device (36) according to Claim 8 or 9, **characterised in that** the linear drive system (38) is constructed as an electromechanical linear drive system (38).

13. The device (36) according to Claim 12, **characterised in that** the linear drive system (38) is constructed as a linear motor.

14. The device (36) according to Claim 12, **characterised in that** the linear drive system (38) is constructed as a piezoelectric linear actuator.

15. The device (36) according to Claim 12, **characterised in that** the linear drive system (38) is constructed as an electromagnetic linear drive.

16. The device (36) according to one of Claims 8 to 15, **characterised in that** it is provided for fixing the wire electrode (14) using a clamping device.

17. The device (36) according to Claim 16, **characterised in that** the clamping device is integrated in the linear drive system (38).

18. The device (36) according to one of Claims 8 to 17, **characterised in that** the clamping device is connected to the control device.

19. A welding or soldering device (1) with a device (36) according to one or a plurality of the preceding Claims 8 to 18.

## Revendications

1. Procédé pour un transport de fil discontinu, en particulier lors du soudage à l'arc ou du brasage à l'arc, pour lequel le fil-électrode (14) est guidé dans un guide-fil (42) et transporté en continu depuis une réserve de fil (12) en direction d'un chalumeau (8), un mouvement discontinu étant imprimé au fil-électrode (14), une distance de transport du fil-électrode (14) étant prolongée ou raccourcie par un mouvement de translation (41) d'au moins un système d'entraînement linéaire (38) couplé au guide-fil (42) d'une unité réversible (36), **caractérisé en ce que** le pilotage de l'unité réversible (36) a lieu par un dispositif de commande pour une source d'énergie de soudage (4), les paramètres de processus et le mouvement (41) du système d'entraînement linéaire (38) étant contrôlés par le dispositif de commande de sorte qu'un mouvement du système d'entraînement linéaire (38) dépendant du processus et de ce fait un pilotage du mouvement discontinu du fil-électrode (14) sont rendus possibles à la sortie du chalumeau.

2. Procédé selon la revendication 1, **caractérisé en ce que** le mouvement de translation (14) est effectué pour l'essentiel dans ou contrairement au sens de transport (45) du fil-électrode (14).

3. Procédé selon la revendication 1 ou 2, **caractérisé en ce qu'**une vitesse de transport du fil-électrode (14) côté chalumeau est temporairement réduite ou augmentée par le mouvement de translation (41) du système d'entraînement linéaire (38).

4. Procédé selon une quelconque des revendications 1 à 3, **caractérisé en ce qu'**un mouvement côté chalumeau du fil-électrode (14) est temporairement arrêté par le mouvement de translation (41) du système d'entraînement linéaire (38).

5. Procédé selon une quelconque des revendications 1 à 4, **caractérisé en ce qu'**un mouvement côté chalumeau du fil-électrode (14) a temporairement lieu par le mouvement de translation (41) du système d'entraînement linéaire (38) contrairement au sens de transport (45) du fil-électrode (14).

6. Procédé selon une quelconque des revendications 1 à 5, **caractérisé en ce que** les irrégularités de transport du fil-électrode (14) sont compensées par le mouvement de translation (41) du système d'entraînement linéaire (38).

7. Procédé selon une quelconque des revendications 1 à 6, pour lequel le mouvement de translation (41) du système d'entraînement linéaire (38) est contrôlé.

8. Dispositif (36) pour imprimer un mouvement de transport de fil discontinu, en particulier pour réaliser le procédé selon une quelconque des revendications précédentes, avec un dispositif d'avance du fil (6) transportant en continu, pour lequel le guide-fil (42) est couplé avec au moins un système d'entraînement linéaire (38) d'une unité réversible (36) **caractérisé en ce que** l'unité réversible (36) et un dispositif surveillant le mouvement d'arrêt du système d'entraînement linéaire (38) de l'unité réversible (36) sont reliés avec un dispositif de commande pour une source d'énergie de soudage (4), les paramètres de processus et le mouvement (41) du système d'entraînement linéaire (38) étant contrôlés par le dispositif de commande de sorte qu'un mouvement du système d'entraînement linéaire dépendant du processus et de ce fait un pilotage du mouvement discontinu du fil-électrode sont rendus possibles à la sortie du chalumeau.

9. Dispositif (36) selon la revendication 8, **caractérisé en ce que** le fil-électrode (14) peut être transporté à travers le système d'entraînement linéaire.

10. Dispositif (36) selon la revendication 8 ou 9, **caractérisé en ce qu'**il comprend une mémoire tampon (49).

11. Dispositif (36) selon la revendication 10, **caractérisé en ce que** la mémoire tampon (49) est constituée par le guide-fil (42).

12. Dispositif (36) selon la revendication 8 ou 9, **caractérisé en ce que** le système d'entraînement linéaire (38) est constitué comme un système d'entraînement linéaire électromécanique (38).

13. Dispositif (36) selon la revendication 12, **caractérisé en ce que** le système d'entraînement linéaire (38) est constitué comme un moteur linéaire.

14. Dispositif (36) selon la revendication 12, **caractérisé en ce que** le système d'entraînement linéaire (38) est constitué comme un actionneur linéaire piézoélectrique.

15. Dispositif (36) selon la revendication 12, **caractérisé en ce que** le système d'entraînement linéaire (38) est constitué comme un système d'entraînement linéaire électromagnétique.

16. Dispositif (36) selon une quelconque des revendications 8 à 15, **caractérisé en ce qu'**il est muni d'un système de serrage pour fixer le fil-électrode (14).

17. Dispositif (36) selon la revendication 16, **caractérisé en ce que** le système de serrage est intégré dans le système d'entraînement linéaire (38).

18. Dispositif (36) selon une quelconque des revendications 8 à 17, **caractérisé en ce que** le système de serrage est relié au système de commande.

19. Dispositif de soudage ou de brasage (1) avec un dispositif (36) selon une quelconque ou plusieurs des revendications précédentes 8 à 18.
